# EUROPÄISCHE PATENTANMELDUNG

(11) **EP 4 408 034 A1**
(43) Veröffentlichungstag der Anmeldung: **31.07.2024**
(21) Anmeldenummer: 23154018.8
(22) Anmeldetag: 30.01.2023
(51) Int. Cl.: H04W 4/02, H04L 67/12, H04W 4/80, H04W 76/10, H04W 84/18

(54) **VERFAHREN ZUR HERSTELLUNG EINER DATENVERBINDUNG ZWISCHEN GERÄTEN UND EINRICHTUNG ZUR DURCHFÜHRUNG DES VERFAHRENS**

(71) Anmelder: Erbe Elektromedizin GmbH, 72072 Tübingen (DE)
(72) Erfinder: SEITZ, Björn, 72793 Pfullingen (DE)
(74) Vertreter: Rüger Abel Patentanwälte PartGmbB

(57) **Zusammenfassung**

Das erfindungsgemäße Gerätesystem ermöglicht ein automatisches Pairing verschiedener Geräte (15 - 20) innerhalb verschiedener Operationsumgebungen (10, 11). Das Pairing erfolgt anhand der Signalstärke oder per Indoornavigation (z.B. Bluetooth 5). Es wird detektiert, ob sich ein Kommunikationspartner, d.h. ein anderes Gerät (15 - 20) in einem festgelegten Radius (S1) von jedem anderen Gerät oder von einem zentralen Gerät (17, 20) entfernt befindet. Bei der Detektion wird das Pairing per UUID oder Zertifikatsaustausch automatisch ausgelöst ohne weitere Interaktion durch den Anwender oder mit einfacher Bestätigung durch den Anwender.

## Beschreibung

Gegenstand der Erfindung ist ein Verfahren zur Herstellung einer Datenverbindung zwischen Geräten sowie
ein aus mehreren Geräten bestehendes System, wobei zwischen den Geräten eine Datenverbindung etablierbar ist. Insbesondere können die Geräte des Gerätesystems in einem allgemeinen Datenübertragungsnetz ein Subnetz bilden.

Solche Gerätesysteme kommen insbesondere in Krankenhausumgebungen oder sonstigen Operationsumgebungen, beispielsweise OP-Sälen in festen Gebäuden oder auch in temporären Aufbauten zur Anwendung.

Es wird häufig gewünscht, die in einem Operationssaal oder in einer sonstigen Operationsumgebung einzusetzenden Geräte untereinander sowie gegebenenfalls auch mit einem übergeordneten Netz zu verbinden, über das die Geräte untereinander oder mit anderen Ressourcen Daten austauschen können.

Dazu beschreibt die US 2019/0200844 A1 in einer Operationsumgebung einzusetzende Geräte, die mittels Bluetooth-Technologie ihrer Abstände zueinander bestimmen können. Außerdem können die Geräte über Bluetooth mit Instrumenten gekoppelt werden. Des Weiteren beschreibt die Druckschrift die Erzeugung eines Mappings der Geräte durch gegenseitige Triangulation.

Die US 2022/238209 A1 beschreibt ebenfalls die Nutzung eines Funknetzes mit kurzer Reichweis, wie zum Beispiel Bluetooth in einer Operationsumgebung sowie auch die Integration dieses Netzes in ein Netz mit größerer Reichweite.

Die EP 2 826 158 A1 beschreibt die Anmeldung in einem drahtlosen lokalen Netzwerks mittels Nahfeldkommunikation (NFC).

Weiterer Stand der Technik geht aus der EP 2 126 854 A2, der US 8,165,102 B1 sowie der EP 2 753 233 A1 hervor.

Es ist Aufgabe der Erfindung, ein einfaches Verfahren zur Vernetzung von mehreren Geräten miteinander innerhalb einer Operationsumgebung anzugeben. Außerdem soll das Verfahren möglichst sicher anwendbar sein. Es wird angestrebt, die Vernetzung auf die Operationsumgebung zu beschränken.

Weiter ist es Aufgabe der Erfindung, ein Gerätesystem anzugeben, das die vorgenannte Aufgabe erfüllt.

Diese Aufgaben werden mit dem Verfahren nach Anspruch 1 und dem Gerätesystem nach Anspruch 10 gelöst:

Das erfindungsgemäße Verfahren beruht auf in einer Operationsumgebung anordenbaren Geräten, die jeweils mindestens eine zur Entfernungsmessung geeignete kommunikationseinrichtung aufweisen. Die mindestens eine Kommunikationseinrichtung kann eine erste drahtlose Kommunikationseinrichtung mit einer ersten Reichweite sowie, optional, eine zweite drahtgebundene oder drahtlose Kommunikationseinrichtung mit einer zweiten Reichweite umfassen, die von der ersten Reichweite abweicht, insbesondere diese übersteigt. Die erste Reichweite ist vorzugsweise begrenzt, weiter vorzugsweise kurz. Unter einer kurzen Reichweite wird dabei eine Reichweite verstanden, die in der Größenordnung einer Operationsumgebung liegt und beispielsweise allgemein etwa 10 m bis 100 m beträgt. Unter einer allgemeinen Reichweite wird eine Reichweite in einer Umgebung ohne übertragungsstörende Gegenstände (Freifeldreichweite) verstanden. Infolge der kurzen Reichweite sind die ersten Kommunikationseinrichtungen dazu eingerichtet und nutzbar, den Abstand zwischen den Geräten zu bestimmen. Zur Abstandsbestimmung kann beispielsweise die Feldstärke des drahtlos übertragenen Signals am empfangenden Gerät genutzt werden.

Erfindungsgemäß wird die erste Kommunikationseinrichtung zur Bestimmung des Abstands zwischen den Geräten genutzt. Unterscheidet der ermittelte Abstand einen ersten Schwellwert, wird die Herstellung einer Kommunikationsverbindung zwischen den Geräten und deren Integration in ein Netzwerk freigegeben. Die Kommunikationsverbindung wird z.B. mittels der ersten, vorzugsweise aber mittels der anderen, zweiten Kommunikationseinrichtung aufgebaut, d.h. es erfolgt die Freigabe zur Integration der zweiten Kommunikationseinrichtung in das Netzwerk. Dieses Netzwerk kann ein Subnetzwerk innerhalb eines allgemeinen Netzwerks sein. Während das Subnetzwerk nur die Geräte der Operationsumgebung erfasst, kann das allgemeine Netzwerk eine Vielzahl weiterer Einrichtungen, Geräte und Teilnehmer umfassen.

Die Freigabe kann die unmittelbare Herstellung der Kommunikationsverbindung zwischen den freigegebenen Geräten bedeuten. Es ist jedoch auch möglich, nach Freigabe der Herstellung der Kommunikationsverbindung die tatsächliche Integration des betreffenden Geräts in das Subnetzwerk von der Erfüllung weiterer Bedingungen abhängig zu machen. Dazu wird die Erfüllung wenigstens einer weiteren Bedingung geprüft und die Kommunikationsverbindung erst nach Erfüllung dieser weiteren Bedingungen hergestellt. Solche weiteren Bedingungen können beispielsweise die Positionierung der Geräte in einem bestimmten Winkel zu einem ausgewählten Gerät, die manuelle Freigabe der Herstellung der Verbindung oder anderes mehr sein.

Das von den zweiten Kommunikationseinrichtungen hergestellte oder genutzte (Sub-)Netzwerk arbeitet vorzugsweise nach einem herstellerunabhängigen Standard wie zum Beispiel SDC (dienstorientierte Gerätekommunikation) und kann leitungsgebunden oder leitungslos realisiert sein, beispielsweise im Rahmen eines LAN (Local Area Network) oder WLAN (Wireless Local Area Network) oder WIFI.

Die Freigabe der Herstellung einer Kommunikationsverbindung zu diesem Netzwerk wird erteilt, wenn der Abstand der betrachteten Geräte zueinander einen ersten Schwellwert unterschreitet. Dieser Schwellwert ist vorzugsweise deutlich geringer als die maximale Reichweite der ersten Kommunikationseinrichtung mit kurzer Reichweite. Dadurch wird der Schwellwert nicht durch die Reichweite der ersten Kommunikationseinrichtung bestimmt, sondern ist ein definierter vorgegebener Wert. Dieser Wert liegt vorzugsweise im Bereich von einem oder wenigen Metern.

Es ist möglich, diesen Wert für die ersten Kommunikationseinrichtungen fest vorzugeben. Alternativ ist es möglich, diesen Schwellwert an der Bedienüberfläche wenigstens eines der Geräte anzuzeigen und über eine Eingabemöglichkeit zu variieren. Dazu ist wenigstens ein Gerät des Gerätesystems mit einer Anzeige- und Eingabeeinrichtung sowie mit einer Steuerung versehen, die dazu eingerichtet ist, den Schwellwert entsprechend der Eingaben einzustellen. Alternativ kann eine Serviceschnittstelle vorgesehen sein, die derart ausgebildet ist, dass nur qualifiziertes Servicepersonal den vorgegebenen Schwellwert ändern kann. Weiter ist es möglich, die Schwellwerte für anzuschließende Geräte geräteindividuell festzulegen. Z.B. kann ein "Teachin"-Verfahren genutzt werden. Zum Beispiel können die Geräte in einem bestimmten Abstand und/oder Winkel zueinander angeordnet und gegebenenfalls auf dem User Interface eines der beteiligten Geräte angezeigt werden. Es kann ein "SET"-Button vorgesehen sein, durch dessen Betätigung ein oder mehrere Geräte selektiert werden und der momentane Abstand und/oder Winkel wird als gültiger Schwellwert gesetzt wird.

Es ist möglich eines der Geräte ortsfest anzuordnen, um einen festen Bezugspunkt zu bilden, sodass der Abstand jedes anderen Geräts zu diesem festen Bezugspunkt gemessen wird. Der feste Bezugspunkt kann beispielsweise unmittelbar am Operationsort beispielsweise in einem ausgewählten Gerät oder auch am Operationstisch oder an einem anderen gebäudefesten Ort angeordnet sein.

Die ersten Kommunikationseinrichtungen der Geräte können dazu dienen, zwischen den Geräten Zertifikate und/oder universelle Geräteidentifikatoren (UUID) auszutauschen, über die die Geräte nachfolgend mittels der zweiten Kommunikationseinrichtungen untereinander und/oder mit einem äußeren anderen Netzwerk kommunizieren. Der Zertifikataustausch oder UUID-Austausch zwischen den Geräten erfolgt nach dem erfindungsgemäßen Verfahren schon dann, wenn der Abstand der Geräte untereinander den ersten Schwellwert unterschreitet (wobei vorgesehen sein kann, dass weitere Bedingungen zu erfüllen sind, wie beispielsweise manuelle Freigabe). Mit anderen Worten, werden die Geräte auf einen Mindestabstand aneinander angenähert, koppeln sie zunächst untereinander für den Zertifikatsaustausch (und/oder den UUID-Austausch) und bilden dann ein lokales Netzwerk über ein passendes Protokoll, z.B. SDC.

Es ist möglich, einen zweiten Schwellwert festzulegen, der gleich oder größer ist, als der erste Schwellwert. Die Geräte können darauf ausgelegt sein, die Kommunikationsverbindung innerhalb des operationsumgebungsspezifischen Netzwerks aufzulösen, sobald der zweite Schwellwert überschritten wird. Die betreffenden Geräte werden dann aus dem Subnetzwerk der Operationsumgebung herausgelöst. Auf diese Weise können Geräte, die aus der Operationsumgebung herausgeführt werden, automatisch aus der Kopplung mit den anderen Geräten der Operationsumgebung herausgenommen werden. Die Verbindung der Geräte zu dem allgemeinen Netz kann ebenfalls aufgelöst oder, wie es bevorzugt wird, auch erhalten bleiben.

Insoweit bietet die Erfindung einen komfortablen Umgang mit Geräten, die vollständig oder halbautomatisch miteinander koppeln, sobald sie einen Mindestabstand zueinander unterschreiten und die automatisch entkoppeln sobald sie einen Maximalabstand überschreiten.

Zusätzlich zu der Abstandsinformation kann die Richtungsinformation zwischen Geräten ausgewertet werden. Dies ist insbesondere sinnvoll, wenn eines der Geräte ortsfest, z.B. am Operationstisch angeordnet ist und als Gerätekoppler die Funktion der Gerätekopplung zentral übernimmt. Insbesondere kann vorgesehen sein, dass der Gerätekoppler die Richtung zu dem jeweiligen anderen Gerät bestimmt und eine Kopplung nur dann vornimmt, wenn nicht nur der Mindestabstand unterschritten ist, sondern das zu koppelnde Gerät zusätzlich auch in einem von dem Gerätekoppler vorgegebenen Winkelbereich liegt. Dies ermöglicht eine noch bessere Unterscheidung zwischen Geräten, die zu der Operationsumgebung gehören, und Geräten einer benachbarten Operationsumgebung.

Mit dem erfindungsgemäßen Verfahren lassen sich nicht nur Geräte in die zu der Operationsumgebung gehörige Kommunikation (beispielsweise über SDC) einbinden, sondern auch Personen. Beispielsweise können verschiedene Operateure verschiedene Einstellpräferenzen für die zu verwendenden Geräte haben. Trägt der betreffende Operateur ein Gerät, wie beispielsweise auch ein mobiles Endgerät, wie ein Tablet, oder ein sonstiges bluetoothfähiges Gerät kann dieses Gerät über die erste Kommunikationseinrichtung (beispielsweise Bluetooth) einen Identifikationscode an die Geräte senden, die diesen dann über die zweite Kommunikationseinrichtung an ein Kliniknetzwerk weitergeben. Dieses kann beispielsweise eine Datenbank enthalten, in der die individuellen Einstelldaten, wie zum Beispiel Effekt, Effektstärke, usw. verschiedener Operateure abgespeichert sind. Diese Individuellen Einstelldaten werden dann über die zweite Kommunikationseinrichtung im Netzwerk verteilt. Diese Einstellungen müssen nicht zwingend auf einer zentralen Datenbank vorgehalten werden. Auch eine lokale Speicherung auf einem der Kommunikationsteilnehmer ist möglich. Die Geräte können diese Vorzugseinstellungen dann übernehmen. Auf diese Weise findet jeder Operateur in jeder Operationsumgebung des Systems die von ihm präferierten Einstellungen vor ohne die Geräte jeweils gesondert so einstellen zu müssen.

Weitere Einzelheiten von vorteilhaften Ausführungsformen der Erfindung sind Gegenstand der Beschreibung oder von Ansprüchen oder der Zeichnung. In dieser zeigen:
Figur 1 ein erfindungsgemäßes System in einer ersten einfachen Ausführung,
Figur 2 Auszüge aus der Grundstruktur eines zu dem System gehörigen Geräts,
Figur 3 eine Veranschaulichung des Zusammenspiels mehrerer Geräte mit einander und mit einem externen Netz,
Figur 4 und 5 weitere Ausführungsformen des erfindungsgemäßen Gerätesystems.

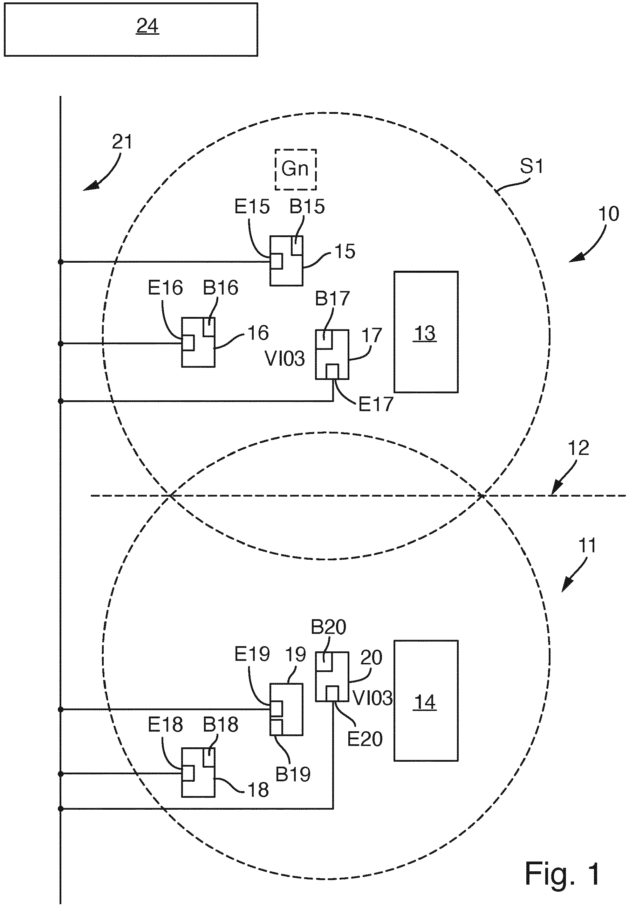

In Figur 1 ist die schematische Situation zweier Operationsumgebungen 10, 11 veranschaulicht, die beispielsweise in einem Krankenhaus oder auch in einer anderen Einrichtung etabliert sind. Die beiden Operationsumgebungen 10, 11 können beispielsweise Operationssäle sein, die von einer in Figur 1 gestrichelt dargestellten Wand 12 voneinander getrennt sind. Die Wand kann massiv und funkwellendämpfend oder auch funkwellendurchlässig ausgebildet sein.

Jede Operationsumgebung 10, 11 enthält einen Operationstisch 13, 14 sowie mehrere Geräte 15, 16, 17, 18, 19, 20. Die Geräte 15 bis 17 gehören zu der ersten Operationsumgebung 10, während die Geräte 18 bis 20 zu der zweiten Operationsumgebung 11 gehören. Sie dienen zum Beispiel der Versorgung von Instrumenten vor, während oder nach Durchführung des Eingriffs am Patienten, der auf dem Operationstisch 13 und/oder 14 liegt. Die Geräte 15 bis 20 können beispielsweise dazu eingerichtet sein, geeignete Fluide (d.h. Gase, Flüssigkeiten, Aerosole oder dergleichen) an angeschlossene Instrumente zu liefern, angeschlossene Instrumente mit Strom oder Spannung zu versorgen, um beispielsweise mittels geeigneter Instrumente Gewebe zu schneiden, zu koagulieren, abzutragen, zu fusionieren oder dergleichen Maßnahmen mehr. Auch können eines oder mehrere der Geräte dazu eingerichtet sein, Gewebeuntersuchungen vorzunehmen, beispielsweise mittels optischer Emissionsspektroskopie Impedanzspektroskopie, Fluiduntersuchung oder dergleichen. Auch können eines oder mehrerer der Geräte als zentrale Bediengeräte etabliert sein, um andere Geräte zu steuern. Im vorliegenden Ausführungsbeispiel sind die Geräte 17 und 20 als zentrale Bediengeräte VIO3 veranschaulicht.

Alle Geräte 15 bis 20 können mit einem Netzwerk 21 verbunden sein, beispielsweise einem klinikweiten Netzwerk oder auch einem weiterreichenden Netzwerk, das ganz oder teilweise kabelgebunden und/oder ganz oder teilweise als Funknetzwerk aufgebaut ist (LAN, WIFI, WLAN, WAN).

Jedes der Geräte 15 bis 20 weist jeweils eine erste Kommunikationseinrichtung B15 bis B20 mit geringer allgemeiner Reichweite auf. Die erste Kommunikationseinrichtung B15 bis B20 ist vorzugsweise eine drahtlose Kommunikationseinrichtung, die mittels Funkwellen oder Licht arbeitet und deren allgemeine Reichweite vorzugsweise mindestens in der Größenordnung der Größe der Operationsumgebung liegt. Unter einer allgemeinen Reichweite wird die Reichweite ohne reichweitenmindernde oder reichweitensteigernde äußere Einflüsse verstanden. Die allgemeine Reichweite der ersten Kommunikationseinrichtungen beträgt vorzugsweise etwa 10 m bis 100 m. Die erste Kommunikationseinrichtung B15 bis B20 kann beispielsweise eine Bluetooth-Kommunikationseinrichtung der Klasse 1 mit einer allgemeinen Reichweite von ca. 100 m, der Klasse 2 mit einer allgemeinen Reichweite von ca. 10 m oder auch der Klasse 3 mit einer allgemeinen Reichweite von nur ca. 1 m sein. In dem in Figur 1 veranschaulichten Beispiel sind die Verhältnisse für eine erste Kommunikationseinrichtung B15 bis B20 mit einer allgemeinen Reichweite von 10 m bis 100 m veranschaulicht. Die Bluetooth-Schnittstelle kann nach dem Bluetooth-Standard 3.0 oder höher ausgebildet sein.

Zur Herstellung der Verbindung zu dem Netzwerk 21 weist jedes Gerät 15 bis 20 eine zweite Kommunikationseinrichtung E15 bis E20 auf, die zum Beispiel drahtgebundene Kommunikationseinrichtungen oder drahtlose Kommunikationseinrichtungen, beispielsweise nach einem gängigen Standard zum Beispiel WIFI oder WLAN sein können. Die Kommunikationseinrichtungen E15 bis E20 sind mit dem Netzwerk 21 verbunden.

Die zu der Operationsumgebung 10 gehörigen Geräte 15, 16, 17 (sowie eventuelle weitere hier nicht veranschaulichte zu dieser Operationsumgebung gehörige Geräte Gn) sollen miteinander, nicht aber mit den Geräten 18, 19, 20 der benachbarten Operationsumgebung 11 kommunizieren (und umgekehrt). Dazu sind die Geräte 15, 16, 17 wie auch die Geräte 18, 19, 20 dazu eingerichtet, in dem jeweiligen Netzwerk 21 eine dienstorientierte Gerätekommunikation auf Basis eines herstellerunabhängigen Standards, wie zum Beispiel SDC, durchzuführen. Sie sind insoweit zu einem Subnetzwerk verbunden. Dazu sind die Geräte 15, 16, 17 sowie 18, 19, 20 dazu eingerichtet, untereinander Zertifikate auszutauschen und damit ein gegen das übrige Netz 21 abgeschlossenes Teilnetzwerk zu bilden. Die Geräte 15 bis 17 bilden ein Cluster während die Geräte 18 bis 20 ein anderes Cluster bilden. Der Zertifikataustausch zwischen den Geräten 15 - 20 erfolgt vorzugsweise über die ersten Kommunikationseinrichtungen B15 - B20.

Die Geräte 15 bis 20 sind dazu eingerichtet, sich nur zu einem Cluster zu verbinden, wenn der Abstand untereinander oder auch, wie es in Figur 1 veranschaulicht ist, der Abstand zu einem zentralen Gerät (hier die Geräte VIO3 17 und VIO3 20) einen Schwellwert S1 unterschreitet. Der Schwellwert S1 ist somit ein Abstandsgrenzwert, der geringer ist als die allgemeine Reichweite der ersten Kommunikationseinrichtungen B15 bis B20.

Die ersten Kommunikationseinrichtungen B15 bis B20 dienen dazu, mit denjenigen Geräten B15 bis B20 einen Schlüssel und/oder ein Zertifikat und oder eine UUID auszutauschen, welche sich innerhalb des Mindestabstands S1 befinden. Nach Austausch dieses Zertifikats können die Geräte B15 bis B17 sowie B18 bis B20 jeweils unter Nutzung des Netzwerks 21 untereinander kommunizieren und somit für die Operationsumgebung 10 ein erstes Sub- oder Teilnetz und für die zweite Operationsumgebung 11 ein zweites Sub- oder Teilnetz bilden.

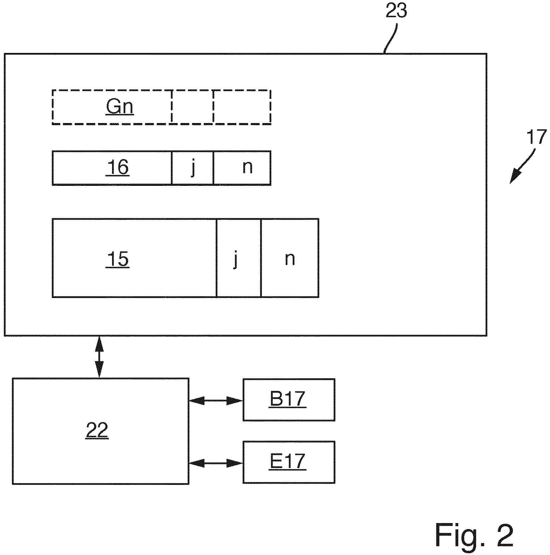

Jedes Gerät 15 bis 20 enthält eine Steuerung 22. Mindestens bei den Geräten 17 und 20, gegebenenfalls aber auch bei den anderen Geräten, ist die Steuerung 22 mit einer Anzeigeeinrichtung 23, beispielsweise in Gestalt eines Bildschirm mit peripher angeordneten Bedienelementen oder auch in Gestalt eines Touchscreens oder dergleichen, verbunden. Die Steuerung 22 ist außerdem mit den Kommunikationseinrichtungen des Geräts, im Beispiel nach Figur 2 mit der ersten Kommunikationseinrichtung 17 und der zweiten Kommunikationseinrichtung E17, verbunden.

Das Gerät 17 kann, wie es in Figur 2 dargestellt ist, dazu eingerichtet sein, mittels seiner ersten Kommunikationseinrichtung B17 den Abstand zu den anderen Geräten 15, 16 sowie, falls vorhanden, zu weiteren Geräten Gn zu messen und diese Geräte, bevor sie in das lokale Netz der Operationsumgebung eingebunden werden, auf der Anzeigeeinrichtung 23 anzuzeigen. Die Anzeige kann dabei eine Abstandsangabe enthalten. Die Abstandsangabe kann in Metern oder Zentimetern numerisch oder durch eine analoge Größendarstellung vorgenommen werden, wonach nahe Geräte größer und ferne Geräte kleiner dargestellt werden. Die Darstellung kann symbolisch oder, wie in Figur 2 angedeutet, auf entsprechend gekennzeichnete Kästchen reduziert vorgenommen werden. Auch andere intuitiv zu verstehende Größendarstellungen sind anwendbar, wie beispielsweise die Zunahme des Farbkontrasts der Gerätesymbolisierung gegenüber dem Hintergrund mit Verringerung des Abstands. In der Gerätedarstellung kann, wie weiter angedeutet ist, ein Eingabefeld j/n (ja/nein) vorgesehen sein, um die Kopplung des Geräts und somit den Zertifikatsaustausch zu bestätigen oder abzulehnen.

In der insoweit beschriebenen einfachsten Ausführungsform arbeitet das vorgestellte Gerätesystem nach Figur 1 wie folgt:
Ausgangspunkt der Beschreibung ist eine Situation, in welcher die Geräte G15 bis G17 in die Operationsumgebung 10 und die Geräte G18 bis G20 in die Operationsumgebung 11 nach Figur 1 verbracht worden sind. Nach Aktivierung der Geräte 15 bis 17 sind deren Steuerungen zunächst darauf eingerichtet, mittels der ersten Kommunikationseinrichtung B15 bis B17 die Abstände zu dem zentralen steuernden Gerät 17 zu bestimmen. Alle Geräte, deren Abstand zu dem Gerät 17 unter dem Schwellwert S1 liegt, tauschen nun über die ersten Kommunikationseinrichtungen B15 bis B17 miteinander Zertifikate oder Schlüssel aus, mittels derer sie im weiteren über das Netzwerk 21 ein Subnetzwerk bilden und darin verschlüsselt kommunizieren. Dies kann automatisch rein abstandsbestimmt geschehen.

Es ist jedoch auch möglich, dass die Geräte 15 bis 17 ihren Schlüssel erst dann austauschen, wenn dies manuell bestätigt worden ist. Dazu werden die Geräte 15 und 16 auf dem Bildschirm 23 des Geräts 17 zunächst zumindest symbolisch veranschaulicht und dort durch manuelle Eingabe entweder freigegeben (zugelassen) oder abgelehnt. Dadurch wird vermieden, dass Geräte benachbarter Operationsumgebungen versehentlich gekoppelt werden, weil die Operationsumgebungen dicht beieinander liegen. Ist die Wand 12 in der Ausführungsform nach Figur 1 jedoch massiv, ist die Gefahr der Fehlkopplung weitgehend ausgeschlossen. Auch ist es möglich, den Schwellwert S1 niedrig anzusetzen, sodass die Geräte 15 bis 17 bis auf wenige Dezimeter aneinander herangebracht werden müssen, um zu koppeln. Eine solche Ausführungsform vermeidet den Aufwand der manuellen Bestätigung wie er in Figur 2 angedeutet ist.

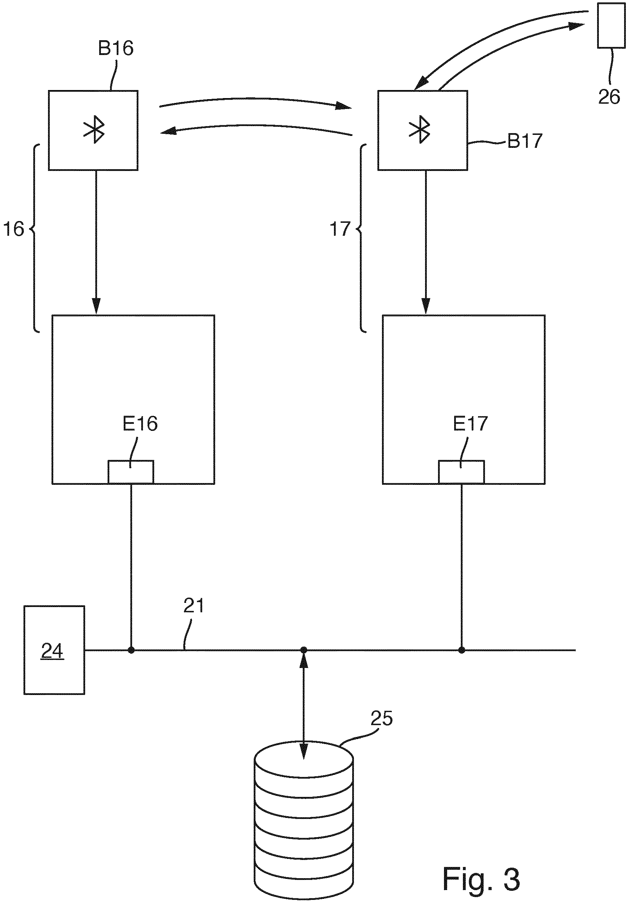

Figur 3 veranschaulicht eine Ergänzung des insoweit beschriebenen Systems auf Basis der Geräte 16 und 17 und die Einbindung in das Netzwerk 21 beispielsweise einer Klinik oder einer sonstigen Operationsumgebung. Das Netzwerk 21 kann das Kliniknetzwerk sein, das zum Beispiel eine oder mehrere Datenbanken 25 oder sonstige geeignete Datenspeicher umfasst. Der Datenspeicher oder die Datenbank 25 kann Patientendaten, Operationsdaten, Operationspläne, Geräteeinstellungen für bestimmte Operationen und/oder bestimmte Operateure enthalten. Die ersten Kommunikationseinrichtungen B16, B17 dienen wiederum zur Abstandsmessung zwischen den Geräten 16, 17.

Zusätzlich kann zumindest einer der ersten Kommunikationseinrichtungen, hier die Kommunikationseinrichtung B17 dazu dienen, mit einem mobilen Endgerät 26 zu kommunizieren, beispielsweise in Gestalt eines zu einem Operateur gehörigen Mobiltelefons. Es kann sich dabei auch um andere Endgeräte beispielsweise ein Tablet, ein Pager, eine Schlüsselkarte, ein Buetoothdongle oder dergleichen handeln. Über das mobile Endgerät 26 kann sich der Operateur an den Geräten 15 bis 17 seiner Operationsumgebung 10 anmelden. Das Gerät 17 wie auch jedes andere Gerät 15, 16 kann dann dazu eingerichtet sein, über das lokale, zu der Operationsumgebung 10 gehörige Teilnetz hinaus über das Kliniknetz 21 auf die Datenbank 25 zuzugreifen, beispielsweise, um operateurspezifische Einstelldaten für die Geräte 15, 16, 17 zu laden und die Geräte 15, 16, 17 entsprechend einzustellen. Damit findet jeder Operateur gewissermaßen seine bevorzugte Einstellung vor, ohne alle Geräte jeweils manuell in der von ihm gewünschten Weise beispielsweise hinsichtlich Mode und Effektstärke einstellen zu müssen.

Das mobile Endgerät 26 kann auch ein zum Patienten gehöriges und somit den Patienten identifizierendes Endgerät sein, das über die erste Kommunikationseinrichtung B17 den Patienten in der gewählten Operationsumgebung identifiziert. Das hier aus den Geräten 15, 16, 17 gebildete Gerätesubsystem kann nun wiederum über das Netzwerk 21 auf die Datenbank 25 zugreifen und beispielsweise zum Patienten gehörige Daten, wie zum Beispiel Diagnose, Operationsplan, usw. beziehen und zum Beispiel auf der Wiedergabeeinrichtung 23 zur Anzeige bringen. Auch können die Geräte 15 - 17 auf diese Weise dem Operationsplan entsprechend voreingestellt werden.

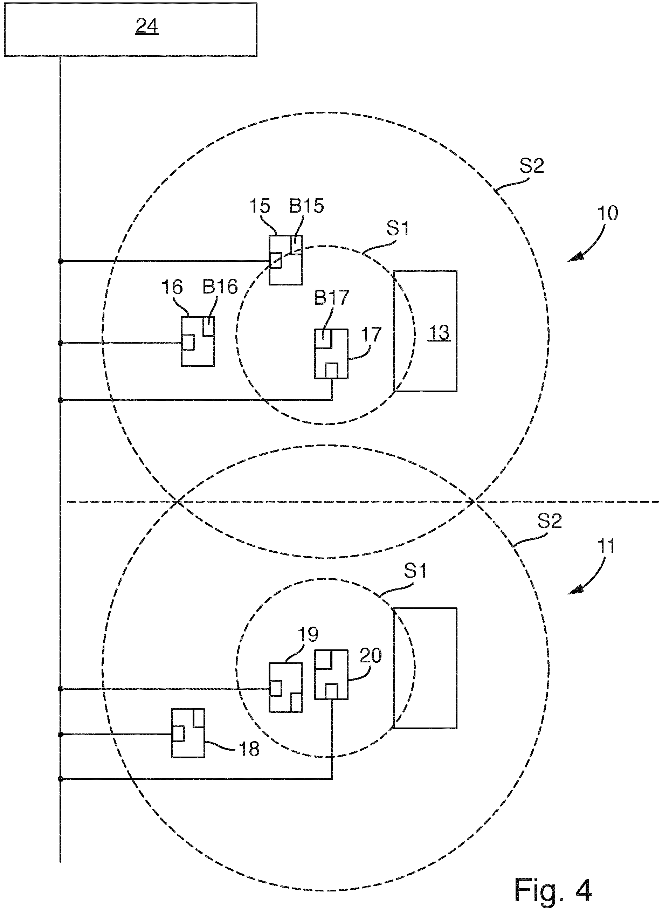

Figur 4 veranschaulicht eine abgewandelte Ausführungsform der Erfindung, für die die vorige Beschreibung unter Zugrundelegung der bereits eingeführten Bezugszeichen entsprechend gilt. Zusätzlich zu der vorigen Beschreibung gilt, dass der erste Schwellwert S1, der den Mindestabstand zur Kopplung der Geräte 15, 16, 17 markiert, durch einen zweiten Schwellwert S2 ergänzt ist, der den Höchstabstand markiert, innerhalb dessen die Geräte 15, 16, 17 miteinander gekoppelt bleiben. Wiederum dienen die ersten Kommunikationseinrichtungen B15, B16, B17 der Messung des Abstands zwischen dem Gerät 17 und den anderen Geräten 15, 16. Die Steuereinrichtungen der Geräte 15, 16, 17 sind darauf eingerichtet, über die ersten Kommunikationseinrichtungen B15, B16, B17 nur dann in Kommunikation und somit in Zertifikataustausch zu treten, wenn der Abstand den ersten Schwellwert S1 unterschreitet. Die Geräte 15, 16, 17 müssen zur Kopplung deswegen auf einen Abstand aneinander herangeführt werden, der den ersten Schwellwert S1 von beispielsweise 1 oder 2 m unterschreitet. Auf eine manuelle Bestätigung nach dem Muster nach Figur 2 kann verzichtet werden, wenn dieser erste Schwellwert S1 gering genug ist. Die Geräte 15 bis 17 sind weiter darauf eingerichtet, die Kopplung und somit das von ihnen aufgebaute Subnetz aufrecht zu erhalten solange der Abstand nicht größer als der zweite Schwellwert S2 ist.

Gleiches gilt entsprechend für die zweite Operationsumgebung 11. Wie Figur 4 andeutet, können die Geräte 15, 16, 17, nachdem sie sich einmal innerhalb des von dem ersten Abstand S1 definierten Radius aufgehalten haben, innerhalb des von dem zweiten Schwellwert S2 vorgegebenen Radius frei bewegt werden, ohne die Kopplung wieder zu verlieren. Eine versehentliche Kopplung von Geräte der ersten Operationsumgebung 10 mit Geräten der zweiten Operationsumgebung 11 ist jedoch ausgeschlossen, weil sich zwar die von den zweiten Schwellwerten S2 vorgegebenen Radien, nicht aber die von den ersten Schwellwerten S1 vorgegebenen Radien überscheiden.

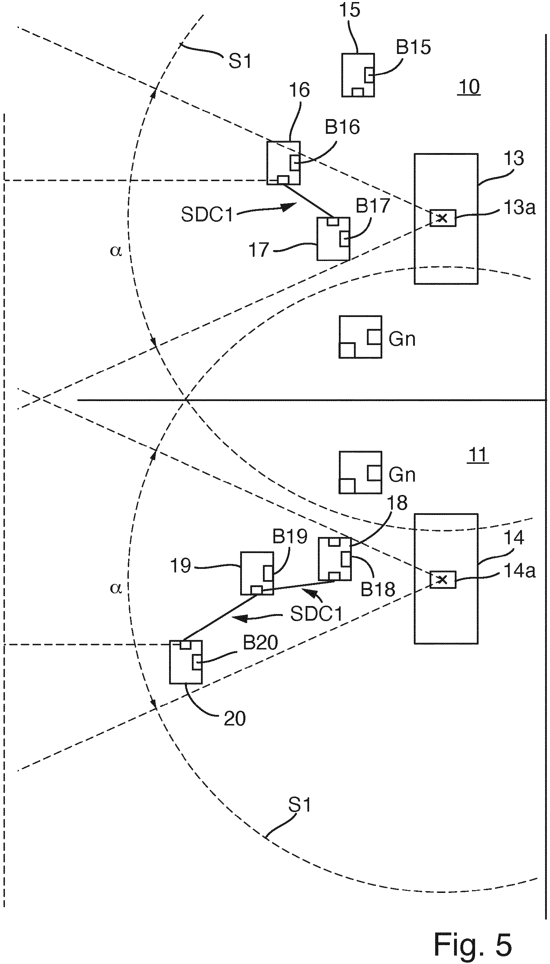

Zusätzlich oder alternativ zu den vorstehend beschriebenen Maßnahmen ist es auch möglich, nicht nur Abstandsinformation, sondern auch Richtungsinformation auszuwerten. Ein Ausführungsbeispiel dazu ist schematisch in Figur 5 angedeutet. Die Besonderheit dieser Gerätesysteme liegt darin, dass den Operationstischen 13, 14 Gerätekoppler 13a, 14a zugordnet sind, die dazu eingerichtet sind, mit den ersten Kommunikationseinrichtungen B15 bis B20 zu kommunizieren, sofern deren Abstand zu dem Gerätekoppler 13a, 14a geringer ist als der Schwellwert S1, und ferner, sofern die Geräte 15 bis 20 innerhalb eines Winkels α liegen, der von dem Gerätekoppler 13a oder 14a bestimmt wird. Figur 5 veranschaulicht ein Gerät Gn, dessen Abstand zu dem Gerätekopplern 13a, 14a zwar geringer ist als der Schwellwert S1, wobei es jedoch außerhalb des Winkels α und somit außerhalb der von den Gerätekopplern 13a, 14a definierten Koppelsektoren liegt. In dieser Position wird es nicht in das Subnetz SDC1 und auch nicht in das Subnaetz SDC2 integriert, die in Figur 35 jeweils durch Verbindungslinien zwischen den gekoppelten Geräten 16, 17; 18, 19, 20 angedeutet sind. Nicht gekoppelt ist dementsprechend auch das Gerät 15 in der Operationsumgebung 10.

Das erfindungsgemäße System kann auch zur Nachrichten Priorisierung genutzt werden. Dabei kann die Steuerung der Geräte darauf eingerichtet sein, die auszutauschenden Nachrichten umso höher zu priorisieren je geringer der Abstand zwischen den Geräten ist. Anhand der Priorität kann zum Beispiel die Sichtbarkeit auf einem Endoskopiesystem erhöht werden.

Außerdem kann das zur Priorisierung der Geräte 15 - 20 geeignete System auch zur Systemkonfiguration genutzt werden. Befindet sich zum Beispiel ein Arzt auf einer zuvor definierten Position zum Beispiel einem OP-Tisch, kann automatisch eine zuvor hinterlegte Konfiguration zum Beispiel hinsichtlich der Mode oder der Effekteinstellung aktiviert werden. Die Position des Arztes kann dann beispielsweise über einen Bluetooth-Dongle oder ein Smartphone detektiert werden welches der Arzt mit sich führt.

Außerdem können die Geräte 15 - 20 des Systems dazu eingerichtet sein, bei der Detektion kompatibler Geräte definierte Systemzustände einzunehmen. Werden beispielsweise ein Gerät zur optischen Emissionsspektroskopie (OES) und ein Gerät VIO3 über Bluetooth, d.h. die erste Kommunikationseinrichtung in der Nähe detektiert und befinden sich beide Geräte im gleichen Netzwerk SDC1 oder SDC2, kann an dem Gerät zur elektrischen Versorgung eines Instruments automatisch der für die Gewebeidentifikation mittels optischer Emissionsspektroskopie beste Mode und Effekt eingestellt werden.

Das erfindungsgemäße Gerätesystem ermöglicht ein automatisches Pairing verschiedener Geräte 15 bis 20 innerhalb verschiedener Operationsumgebungen 10, 11. Das Pairing erfolgt anhand der Signalstärke oder per Indoornavigation (z.B. Bluetooth 5). Es wird detektiert, ob sich ein Kommunikationspartner, d.h. ein anderes Gerät 15 bis 20, innerhalb eines festgelegten Radiusses S1 von jedem anderen Gerät oder von einem zentralen Gerät 17, 20 entfernt befindet. Bei der Detektion wird das Pairing per UUID oder Zertifikatsaustausch automatisch ausgelöst ohne weitere Interaktion durch den Anwender oder mit einfacher Bestätigung durch den Anwender.

### Bezugszeichen:

- 10, 11: Operationsumgebungen
- 12: Wand
- 13, 14: Operationstisch
- 13a, 14a: Gerätekoppler
- 15 - 20: Geräte
- Gn: Gerät
- 21: Netzwerk (LAN, WIFI, WLAN, WAN)
- SDC1: erstes Subnetzwerk zur dienstorientierten Gerätekommunikation
- SDC2: zweites Subnetzwerk zur dienstorientierten Gerätekommunikation
- 22: Steuerung
- 23: Anzeigeeinrichtung / Eingabeeinrichtung
- 24: DHCP-Server
- 25: Datenbanken
- 26: mobiles Endgerät

## Patentansprüche

1. Verfahren zur Herstellung einer Datenverbindung zwischen wenigstens zwei Geräten (15 - 17) in einer Operationsumgebung (10), wobei die Geräte (15 - 17) jeweils mindestens eine Kommunikationseinrichtung (B15 - B17, E15 - E17) aufweisen, wobei die Kommunikationseinrichtung (B15 - B17, E15 - E17) eine drahtlose Kommunikationseinrichtung (B15 - B17) ist, wobei bei dem Verfahren:
mittels einer der Kommunikationseinrichtungen (B15 - B17, E15 - E17) der Abstand zwischen den Geräten (15 - 17) bestimmt und die Integration des jeweiligen Geräts (15 - 17) zu einem Subnetzwerk (SDC1) freigegeben wird, wenn der Abstand zwischen den Geräten (15 - 17) einen ersten Schwellwert (S1) unterschreitet.

2. Verfahren nach Anspruch 1, **dadurch gekennzeichnet, dass** eines der Geräte (15 - 17) oder ein Gerätekoppler (13a) ortsfest angeordnet wird, um einen festen Bezugspunkt zu bilden und so den Abstand der anderen Geräte (15 - 17) zu dem festen Bezugspunkt zu messen.

3. Verfahren nach einem der vorstehenden Ansprüche,
**dadurch gekennzeichnet, dass** die Kommunikationsverbindung zu dem Subnetzwerk (SDC1) aufgelöst wird, wenn der Abstand einen zweiten Schwellwert (S2) überschreitet.

4. Verfahren nach einem der vorstehenden Ansprüche,
**dadurch gekennzeichnet, dass** der zweite Schwellwert (S2) gleich wie oder größer als der erste Schwellwert (S1) ist.

5. Verfahren nach Anspruch 2, **dadurch gekennzeichnet, dass** der Gerätekoppler (13a) die Richtung zu den Geräten (15 - 17) bestimmt.

6. Verfahren nach Anspruch 5, **dadurch gekennzeichnet,**
**dass** nur dann eine Kommunikationsverbindung des Geräts (15 - 17) mit einem Subnetzwerk (SDC1) etabliert wird, wenn das Gerät (15 - 17) in einem vorgegebenen Winkelbereich (α) liegt.

7. Verfahren nach einem der vorstehenden Ansprüche,
**dadurch gekennzeichnet, dass** an einem der Geräte (17) alle anderen Geräte (15, 16) angezeigt werden.

8. Verfahren nach Anspruch 6 oder 7, **dadurch gekennzeichnet, dass** diejenigen Geräte (15 - 17), die mit dem Subnetzwerk (SDC1) zu verbinden sind, erst mit dem Subnetzwerk (SDC1) verbunden werden, nachdem sie an dem Gerät (17), an dem sie angezeigt worden sind, freigegeben worden sind.

9. Verfahren nach einem der vorstehenden Ansprüche,
**dadurch gekennzeichnet, dass** jedes Gerät (15 - 17) eine erste Kommunikationseinrichtung (B15 - B17) mit einer ersten Reichweite und eine zweite Kommunikationseinrichtung (E15 - E17) mit einer zweiten Reichweite aufweist, die größer ist als die Reichweite der ersten Kommunikationseinrichtung (B15 - B17), wobei die Kommunikationsverbindung zwischen den Geräten (15 - 17) und die Integration des jeweiligen Geräts (15 - 17) zu einem Subnetzwerk (SDC1) mittels einer zweiten Kommunikationseinrichtungen (E15 - E17) erbracht wird.

10. Gerätesystem mit wenigstens zwei Geräten (15 - 17) in einer Operationsumgebung (10), wobei die Geräte (15 - 17) jeweils zumindest eine Kommunikationseinrichtung (B15 - B17, E15 - E17) aufweisen, wobei die Kommunikationseinrichtung (B15 - B17, E15 - E17) eine drahtlose Kommunikationseinrichtung (B15 - B17, E15 - E17) ist,
wobei die Geräte (15 - 17) dazu eingerichtet sind, mittels ihrer jeweiligen Kommunikationseinrichtung (B15 - B17, E15 - E17), den Abstand zwischen den Geräten (15 - 17) zu bestimmen, und
wobei die Kommunikationseinrichtung (B15 - B17, E15 - E17) dazu eingerichtet ist, eine Kommunikationsverbindung zu einem Subnetzwerk (SDC1) zu etablieren, wenn der Abstand einen ersten Schwellwert (S1) unterschreitet.

11. Gerätesystem nach Anspruch 10, **dadurch gekennzeichnet, dass** eines der Geräte (15 - 17) ein in der Operationsumgebung fest installierter Gerätekoppler (13a) ist.

12. Gerätesystem nach einem der Ansprüche 10 oder 11,
**dadurch gekennzeichnet, dass** zu den Kommunikationseinrichtungen (B15 - B17, E15 - E17) jedes Geräts (15 - 17) eine erste Kommunikationseinrichtung (B15 - B17) mit einer allgemeine Reichweite zwischen 1 m und 100 m und eine zweite Kommunikationseinrichtung (E15 - 17) mit einer größeren Reichweite gehört.

13. Gerätesystem nach einem der Ansprüche 10 bis 12,
**dadurch gekennzeichnet, dass** wenigstens eines der Geräte (17) eine Anzeigeeinrichtung (23) aufweist, über die diejenigen anderen Geräte (15, 16) anzeigbar sind, deren Abstand zu diesem Gerät (17) oder einem Gerätekoppler (13a) einen Schwellwert (S1) unterschreitet.

14. Gerätesystem nach einem der Ansprüche 10 bis 13,
**dadurch gekennzeichnet, dass** eine Eingabeeinrichtung (23) vorgesehen ist, die dazu eingerichtet ist, durch die Anzeigeeinrichtung (23) angezeigte Geräte (15, 16) zur Herstellung einer Kommunikationsverbindung zu dem Subnetzwerk (SDC) freizugeben.

15. Gerätesystem nach einem der Ansprüche 10 bis 14,
**dadurch gekennzeichnet, dass** das Subnetzwerk (SDC1) über ein Netzwerk (21) mit einer Datenbank (25) verbindbar ist.
